# EUROPÄISCHE PATENTSCHRIFT

(11) **EP 1 338 868 B1**
(45) Veröffentlichungstag und Bekanntmachung des Hinweises auf die Patenterteilung: **12.01.2011**
(21) Anmeldenummer: 02020837.7
(22) Anmeldetag: 18.09.2002
(51) Int. Cl.: G01D 5/16

(54) **Verfahren zur Feststellung der Abweichung eines Stellgetriebes**
Method for establishing the state of an adjustment mechanism
Procédé pour l'établissement de la position d'un mécanisme de réglage

(30) Priorität: 15.01.2002 DE 10201141
(43) Veröffentlichungstag der Anmeldung: 27.08.2003
(73) Patentinhaber: Pierburg GmbH, 41460 Neuss (DE)
(72) Erfinder: Köster, Andreas, 45149 Essen (DE); Dismon, Heinrich, 52538 Gangelt (DE)
(74) Vertreter: Patentanwälte ter Smitten

(56) Entgegenhaltungen:
- WO-A2-01/77622
- DE-A1- 10 002 331

## Beschreibung

Die Erfindung betrifft ein Stellgetriebe zur Feststellung der Abweichung von einer vorgegebenen Ausgangsstellung.

Stellgetriebe werden beispielsweise im Bereich der Aktuatorik für Motorkomponenten, z.B. zum Antrieb einer Stelleinheit für Ventile oder Klappensteller, verwendet. Beispiele hierfür finden sich in der deutschen Patentschrift DE 43 24 876 C1 oder in der deutschen Patentanmeldung 100 47 308.3.

Stellgetriebe bewirken eine Änderung einer zu verstellenden Komponente durch Drehen ihrer Abtriebswelle. Ein Maß für die Verstellung ist daher die Abweichung der gedrehten Abtriebswelle von einer vorgegebenen Ausgangsdrehstellung. Diese Abweichung kann folglich durch die Messung des Drehwinkels erfasst werden.

Das messen der Verstellung einer Komponente mit Hilfe von elektromagnetischen Sensoren ist bereits bekannt. Als Sensoren werden dazu Hallelemente oder magnetoresistive Elemente verwendet.

Drehwinkelmesser mit magnetoresistiven Sensoren sind beispielswiese aus der DE 100 02 331 A1 und der WO 01/77622 A2 bekannt. Die DE 100 02 331 A1 beschreibt einen Drehwinkelmesser, bei dem die Drehung eines Maschinenteils mittels Zahnräder auf ein Wellenteil übertragen wird, das an seinem Ende einen Magneten aufweist.

Diesem Magneten gegenüberliegend ist ein magnetoresistiver Sensor angeordnet, der Winkeländerungen des Wellenteils und damit auch des Maschinenteils messen kann.

Einen ähnlichen Aufbau zeigt auch die WO 01/77622, wobei hier jedoch die Welle mit einem stirnseitig angeordneten Sensor direkt mit einem Maschinenteil, hier eines Flügels, verbunden ist. Die Drehbewegung wird ebenfalls durch einen magnetoresistiven Sensor gemessen. Beide Ausführungsformen offenbaren kein Stellgetriebe.

Aufgabe der Erfindung ist es, ein Stellgetriebe zu schaffen, bei der die Feststellung der Abweichung der Abtriebswelle als Antrieb für die Stellkomponente von einer vorgegebenen Ausgangsdrehstellung in einfacher Weise und mit verhältnismäßig geringem Aufwand sowie möglichst geringer Störanfälligkeit bei gleichzeitig großer Effektivität gelöst wird.

Dies wird gemäß der Erfindung durch die Kombination der Merkmale des Patentanspruches 1 erreicht. Ausgangspunkt ist dabei ein Planetengetriebe mit feststehendem Käfig als Stellgetriebe, in das als Meßanordnung ein nach dem magnetoresistiven Wirkprinzip arbeitender Sensor integriert ist. Dabei ermöglicht der an der Stirnseite der Abtriebswelle des im Innern des Getriebes liegenden Wellenendes drehbar angeordnete Magnet in Verbindung mit dem feststehenden Käfig als Träger für die sensitive Einheit des Sensors eine ohne Schwierigkeiten und ohne großen Aufwand realisierbare Lösung, zumal die Teile des Sensors beim Zusammenbau durch Lager im Gehäuse und die Welle in der Gebriebestufe zwangsläufig zentriert werden.

Gegenüber der Abtriebswelle ist keine gesonderte Abschirmung erforderlich, wenn gemäß Patentanspruch 2 die Abtriebswelle aus einem nichtmagnetischen Werkstoff besteht, wie zum Beispiel eine Welle aus Edelstahl.

Von Vorteil ist weiterhin, wenn gemäß Patentanspruch 4 auf der Trägerplatte der sensitiven Einheit des Sensors auch die notwendige Elektronik für die Bereitstellung eines ausreichenden Analogsignales zur Feststellung der Abweichung von der vorgegebenen Ausgangsdrehstellung angeordnet ist und dass die das Analogsignal liefernden Anschlüsse mit einer an der Außenseite des Stellgetriebes angeordneten Steckereinheit verbunden sind.

Auch kann gemäß Patentanspruch 5 durch eine in die Lagerung der Abtriebswelle integrierte Federscheibe das Achsialspiel zwischen dem Magnetplättchen und der Oberfläche der sensitiven Einheit reduziert werden, was die Genauigkeit erhöht.

Nachfolgend seien Einzelheiten der Erfindung an Hand eines in der Zeichnung dargestellten Ausführungsbeispieles näher erläutert. Im Einzelnen zeigen
- FIG 1: eine prinzipielle Darstellung eines magnetoresistiven Sensors und
- FIG 2: eine geschnittene perspetivische Teilansicht eines Planetengetriebes mit integriertem magnetoresistiven Sensor

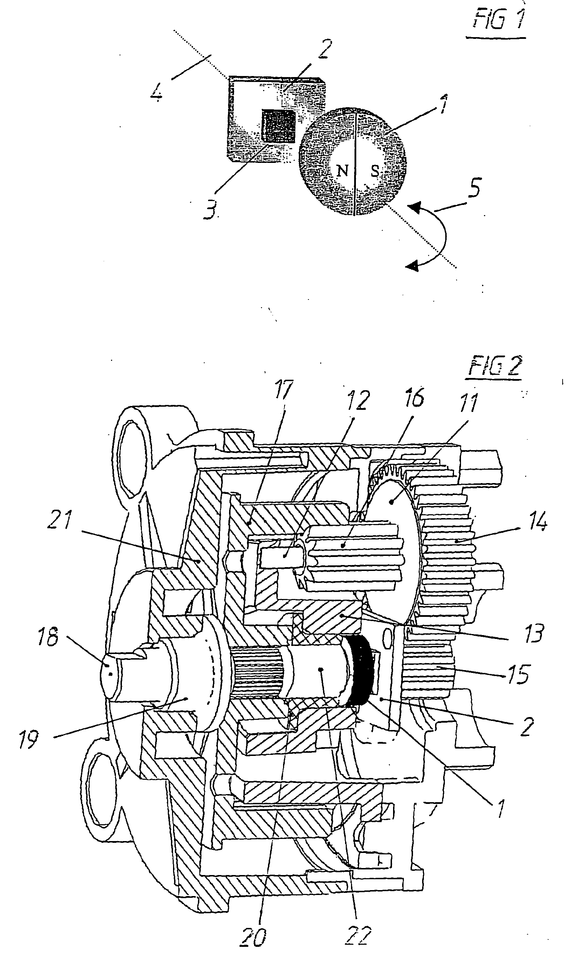

FIG 1 zeigt einen magnetoresistiven Sensor in prinzipieller Darstellung, bestehend aus einem Magneten 1 und einer auf einer Trägerplatte 2 , zum Beispiel Keramik oder Epoxy-Leiterplatte, angebrachten sensitiven Einheit 3. Beide Komponenten sind entlang einer Achse 4 angeordnet und, wie durch den Pfeil 5 angedeutet, gegeneinander verdrehbar, wobei in bekannter Weise der elektrische Widerstand einer anisotropen ferromagnetischen Schicht der sensitiven Einheit 3 durch das magnetische Feld des Magneten 1 verändert wird. Derartige magnetoresistive Sensoren sind beispielsweise in SAE-paper No. 2001-01-0984 beschrieben.

FIG 2 zeigt ein Planetengetriebe in geschnittener perspektivischer Darstellung, wie es aus der deutsche Patentanmeldung 100 47 308.3 bekannt ist. Die Darstellung ist dabei auf das für die Erläuterung der Erfindung notwendige Ausmaß beschränkt.

Das Planetengetriebe ist zweistufig ausgebildet. Die erste Getriebestufe besteht aus zum Beispiel drei Planetenrädern 11, die sich um ortsfeste Achsen 12 drehen, die mit ihren einen Enden in Öffnungen eines feststehenden Käfigs 13 und mit ihren anderen Enden in Öffnungen eines nicht dargestellten Gehäuseteils des Getriebes gelagert sind. Die Planetenräder 11 sind als gestufte Doppelzahnräder ausgebildet, wobei das jeweils erste Zahnrad 14 mit einem Ritzel 15 einer nicht dargestellten Antriebswelle im Eingriff steht. Die zweite Getriebestufe wird von den in Richtung Abtriebsseite weisenden jeweils zweiten Zahnrädern 16 in Verbindung mit einem Hohlrad 17 gebildet. Dieses Hohlrad 17 ist drehfest mit einer Abtriebswelle 18 gekoppelt und steht in kämmendem Eingriff mit den zweiten Zahnrädern 16. Die Abtriebswelle 18 wird von zwei Lagerbuchsen 19 und 20 im Getriebe gehalten, von denen die eine 19 in einer zentrischen Öffnung der Gehäusestirnwand 21 und die andere 20 am feststehenden Käfig 13 angeordnet ist.

Die Abtriebswelle 18 weist im Innern des Getriebes ein freies Wellenende 22 auf, das bei Realisierung der Erfindung als Träger für den Magneten 1 des magnetoresistiven Sensors genutzt wird.

Falls die Abtriebswelle aus nichtmagnetischem Werkstoff , beispielsweise Edelstahl, besteht, kann der Magnet 1 unmittelbar auf der Stirnseite des Wellenendes 22, zum Beispsiel durch Kleben, befestigt werden. Eine gesonderte Abschirmung gegenüber der Abtriebswelle 18, damit diese das Magnetfeld des Magneten 1 nicht beinflußt, ist dann nicht erforderlich.

Gegenüber dem Magneten 1 ist die Trägerplatte 2 für die sensitive Einheit 3 des magnetoresistiven Sensors ortsfest angebracht. Sie kann im vorliegenden Fall in einfacher Weise am Käfig 13 befestigt werden. Die Ausrichtung von Magnet 1 und sensitiver Einheit 3 richtet sich dabei nach der vorgegebenen Ausgangsdrehstellung der Abtriebswelle 18.

Auf der Trägerplatte wird vorzugsweise auch die Elektronik zur Auswertung der elektrischen Widerstandsänderung und zur Bereitstellung eines ausreichenden Analogsignales zur Feststellung der Abweichung von der Ausgangsdrehstellung der Abtriebswelle 18 vorgesehen. Die Anschlüsse für die Stromversorgung der Elektronik und das Meßsignal sind zweckmäßg, wie bei Motor-Getriebekombinationen üblich, mit einer an der Außenseite des Stellgetriebes angeordneten Steckereinheit verbunden, so daß eine Montage mit einer Deckel-Steckereinheit möglich ist.

Um das achsiale Spiel der Abtriebswelle 18 zu verringern, wird zweckmäßig eine Federscheibe in die Lageranordnung integriert und dadurch die Genauigkeit des Sensors erhöht. Insgesamt ergibt sich so ein Stellgetriebe, das infolge seines Aufbaus eine einfache Montage ermöglicht, da der Magnet 1 mit Bezug auf die sensitive Einheit 3 über die Lagerstelle zentriert und geführt wird , und bei dem ein beliebiger Drehwinkelbereich bis nahezu 180° bei verringerter Störanfälligkeit überwacht werden kann.

### Bezugszeichenliste

- 1: Magnet
- 2: Trägerplatte
- 3: sensitive Einheit
- 4: Achse
- 5: Pfeil

- 11: Planetenräder
- 12: Achsen
- 13: Käfig
- 14: erste Zahnräder
- 15: Ritzel
- 16: zweite Zahnräder
- 17: Hohlrad
- 18: Abtriebswelle
- 19: Lagerbuchse
- 20: Lagerbuchse
- 21: Gehäusestirnwand
- 22: freies Wellenende

## Patentansprüche

1. Stellgetriebe mit Einrichtungen zur Feststellung der Abweichung eines Stellgetriebes von einer vorgegebenen Ausgangsstellung durch einen elektromagnetischen Sensor, wobei der elektromagnetische Sensor ein nach dem magnetoresistiven Wirkprinzip arbeitender Sensor ist, der als Bestandteile ein Magnetplättchen und eine sensitive Einheit aufweist, wobei die sensitive Einheit dem Magnetplättchen gegenüberliegend angeordnet ist, **dadurch gekennzeichnet, dass**
das Stellgetriebe als Planetengetriebe mit feststehendem Käfig (13) ausgebildet ist, wobei das Magnetplättchen (1) an der Stirnseite des innerhalb des Stellgetriebes liegenden freien Wellenendes (22) der Abtriebswelle (18) angeordnet ist und die sensitive Einheit (3) des Sensors gegenüber dem Magnetplättchen (1) am feststehenden Käfig (13) angebracht ist.

2. Stellgetriebe nach Anspruch 1, **dadurch gekennzeichnet, dass** die Abtriebswelle (18) aus einem nichtmagnetischen Werkstoff besteht und dass das Magnetplättchen (1) unmittelbar auf der Stirnseite des freien Wellenendes (22) angebracht ist.

3. Stellgetriebe nach Anspruch 2, **dadurch gekennzeichnet, dass** die Abtriebswelle (18) aus Edelstahl besteht.

4. Stellgetriebe nach einem der Ansprüche 1 bis 3, **dadurch gekennzeichnet, dass** auf der Trägerplatte (2) für die sensitive Einheit (3) des Sensors auch die notwendige Elektronik für die Bereitstellung eines ausreichenden Analogsignales zur Feststellung der Abweichung von der vorgegebenen Ausgangsdrehstellung angeordnet ist und dass die Anschlüsse für die Stromversorgung und das Meßsignal mit einer an der Außenseite des Steigetriebes angeordneten Steckereinheit verbunden sind.

5. Stellgetriebe nach einem der Ansprüche 1 bis 4, **dadurch gekennzeichnet, dass** zur Reduzierung des Achsialspiels der Abtriebswelle (18) eine in die Lageranordnung (19, 20) für die Abtriebswelle (18) integrierte Federscheibe vorgesehen ist.

## Claims

1. An adjustment mechanism with means for determining the deviation of an adjustment mechanism from a predetermined initial position by means of an electromagnetic sensor, said electromagnetic sensor being a sensor operating according to the magnetoresistive principle, whose components are a small magnetic plate and a sensitive unit, said sensitive unit being arranged opposite said small magnetic plate, **characterized in that**
said adjustment mechanism is configured as a planetary gear with a stationary cage (13), wherein said small magnetic plate (1) is arranged at the front end side of the free shaft end (22) of the output shaft (18) situated within the adjustment mechanism, and wherein the sensitive unit (3) of the sensor is mounted to the stationary cage (13) opposite the small magnetic plate (1).

2. The adjustment mechanism of claim 1, **characterized in that** said output shaft (18) is made of a non-magnetic material and that the small magnetic plate (1) is provided immediately on the front end side of the free shaft end (22).

3. The adjustment mechanism of claim 2, **characterized in that** said output shaft (18) is made from stainless steel.

4. The adjustment mechanism of one of claims 1 to 3, **characterized in that** the carrier plate (2) of the sensitive unit (3) of the sensor is also provided with the necessary electronics for supplying a sufficient analogous signal for the determination of the deviation from the predetermined initial rotational position, and that the terminals for the current supply and the measuring signal are connected to a plug unit provided on the exterior of the adjustment mechanism.

5. The adjustment mechanism of one of claims 1 to 4, **characterized in that**, for a reduction of the axial play of the output shaft (18), a spring washer is provided that is integrated in the bearing arrangement (19, 20) of the output shaft (18).

## Revendications

1. Mécanisme de réglage avec des moyens pour l'établissement de la déviation d'un mécanisme de réglage d'une position initiale prédéterminée à l'aide d'un capteur électromagnétique, ledit capteur électromagnétique étant un capteur fonctionnant selon le principe d'effet magnétorésistif, dont les composants sont une petite plaque magnétique et une unité sensitive, ladite unité sensitive étant disposée opposée ladite petite plaque magnétique, **caractérisé en ce que**
ledit mécanisme de réglage est réalisé comme une engrenage planétaire avec cage stationnaire (13), ladite petite plaque magnétique (1) étant disposée au front de l'extrémité libre d'arbre (32) dudit arbre de sortie (18) située dans ledit mécanisme de réglage, et que ladite unité sensible (3) dudit capteur est montée sur la cage stationnaire (13), opposée ladite petite plaque magnétique (1).

2. Mécanisme de réglage selon la revendication 1, **caractérisé en ce que** ledit arbre de sortie (18) est formé d'une matière non-magnétique et que ladite petite plaque magnétique (1) est montée directement sur le front de ladite extrémité d'arbre (22).

3. Mécanisme de réglage selon la revendication 2, **caractérisé en ce que** ledit arbre de sortie (18) est formé d'acier inoxydable.

4. Mécanisme selon l'une quelconque des revendications 1 à 3, **caractérisé en ce que** la plaque de support (2) pour l'unité sensible (3) dudit capteur est aussi munie de l'électronique nécessaire pour fournir un signal analogue suffisant pour l'établissement de la déviation de ladite position de rotation initiale prédéterminée, et que les bornes pour l'alimentation en courant et le signal de mesurage sont connectées à une unité de fiche prévue sur l'extérieur dudit mécanisme de réglage.

5. Mécanisme selon l'une quelconque des revendications 1 à 4, **caractérisé en ce qu'**un disque de ressort, intégré dans l'ensemble de palier (19, 20) de l'arbre de sortie (18), est prévu pour réduire le jeu axial de l'arbre de sortie (18).
